**Europäisches Patentamt**

**European Patent Office**

**Office européen des brevets**

(19)

(11) Veröffentlichungsnummer: **0 257 104 B1**

## (12) EUROPÄISCHE PATENTSCHRIFT

(45) Veröffentlichungstag der Patentschrift: **16.10.91**

(51) Int. Cl.5: **G01N 3/04**

(21) Anmeldenummer: **86109576.8**

(22) Anmeldetag: **12.07.86**

(54) **Druckmittelbetriebenes Keilspannzeug für Werkstoffprüfeinrichtungen.**

(43) Veröffentlichungstag der Anmeldung:
**02.03.88 Patentblatt 88/09**

(45) Bekanntmachung des Hinweises auf die
Patenterteilung:
**16.10.91 Patentblatt 91/42**

(84) Benannte Vertragsstaaten:
**CH DE FR GB LI**

(56) Entgegenhaltungen:
**WO-A-83/03003**
**DE-A- 1 920 767**
**DE-U- 1 977 205**
**US-A- 3 335 603**
**US-A- 4 194 402**

(73) Patentinhaber: **CARL SCHENCK AG**
**Landwehrstrasse 55 Postfach 40 18**
**W-6100 Darmstadt(DE)**

(72) Erfinder: **Zuber, Günter**
**Berliner Strasse 23**
**W-6101 Messel(DE)**

(74) Vertreter: **Brandt, Ernst-Ulrich**
**Fa. Carl Schenck AG Patentabteilung Land-**
**wehrstrasse 55 Postfach 40 18**
**W-6100 Darmstadt 1(DE)**

EP 0 257 104 B1

Rank Xerox (UK) Business Services

## Beschreibung

Die Erfindung betrifft ein druckmittelbetriebenes Keilspannzeug für Werkstoffprüfeinrichtungen mit einem Zylindergehäuse, einem im Zylindergehäuse angeordneten Kolben und Keilspannbacken, die vom Kolben beaufschlagt werden und die mit Gegenflächen am Keilspannzeug zur Einspannung einer Probe oder eines Bauteils zusammenwirken.

Aus der DE-AS 2 141 566 ist ein Werkzeug zum Einspannen von Flach- und Rundproben in Werkstoffprüfmaschinen bekannt. Die Spannköpfe des Werkzeugs sind mit einem keilförmigen Spannmaul versehen, in dem keilförmige Spannelemente axial verschieblich gelagert sind. Durch die Keilform des Spannmauls und der Spannelemente wird bei axialer Bewegung gleichzeitig eine radiale (Spann-) Bewegung der Spannelemente erzeugt. Zur Verspannung von Proben werden die Spannelemente durch den Kolben einer Zylinder-Kolbeneinheit in axialer Richtung beaufschlagt. Zur Lösung der Verspannung wird die Zylinder-Kolbeneinheit drucklos gemacht. Durch an den Spannelementen angeordnete Zugfedern, die der Spannkraft der Zylinder-Kolbeneinheit entgegenwirken, werden die Spannelemente in ihre Ausgangsstellung zurückgeführt und damit die Einspannung gelöst. Die Rückzugsbewegung der Spannelemente kann auch durch die Zylinder-Kolbenanordnung bewirkt werden, wenn die Spannelemente am Kolben gelagert und Zylinder, Kolben und Spannelemente entsprechend ausgebildet sind.

Bei einer hydraulischen Spannvorrichtung zum Festklemmen von Spundbohlen, Pfählen oder dgl. (DE-PS 1 484 509) werden radial bewegliche Spannkeile für die zu verspannenden Bauteile durch axial bewegliche Spannkeile beaufschlagt, wobei die Spannkeile an den Keilflächen aufeinander gleiten. Die axial beweglichen Spannkeile werden hydraulisch über eine Zylinder-Kolbenanordnung betätigt.

Bei den bekannten Vorrichtungen sind die durch die hydraulischen Betätigungsvorrichtungen aufzubringenden Kräfte begrenzt, da die Kolben der Betätigungszylinder nicht beliebig groß ausgeführt werden können. Dadurch bedingt entstehen Nachteile wie großes Gewicht, geringe Steifigkeit und größere Ungenauigkeit. Diese Nachteile wirken sich besonders bei einem offenen Keilspannzeug aus.

Weiterhin ist aus der US 3,335,603 ein druckmittelbetriebenes Keilspannzeug für Prüfeinrichtungen gemäß dem Oberbegriff des Patentanspruchs 1 bekannt. Bei diesem bekannten Keilspannzeug sind Zylindergehäuse und Kolben so ausgebildet, daß zum Spannen und Entspannen der Probe jeweils ein Ringraum mit Druckmittel beaufschlagbar ist. Um mit diesem Keilspannzeug unterschiedliche Spannkräfte zur Verspannung von Proben zu erzeugen, muß die Druckmittelzufuhr entsprechend geregelt werden.

Aus der DE-OS 1 920 767 ist ebenfalls ein druckmittelbetriebenes Keilspannzeug für Prüfeinrichtungen bekannt. Bei diesem Keilspannzeug ist ebenfalls zum Spannen und Entspannen der Probe jeweils ein Ringraum mit Druckmittel beaufschlagbar.

Es ist Aufgabe der vorliegenden Erfindung, ein druckmittelbetriebenes Keilspannzeug zu schaffen, mit dem in einfacher Weise unterschiedliche Spannkräfte zur Verspannung von Proben erzeugt werden können. Diese Aufgabe wird durch die in dem Patentanspruch 1 angegebenen Merkmale gelöst. Die weiteren Ansprüche betreffen Ausgestaltungen der Erfindung.

Durch die Ausbildung von mindestens zwei hintereinander liegenden Kolben-Zylindereinheiten mit Ringräumen, die zur Einspannung der Probe vorgesehen sind, kann die Spannkraft verdoppelt bzw. vervielfacht werden, ohne daß die Außenabmessungen einer Spanneinheit wesentlich vergößert werden müssen. Lediglich die Länge der Einheit wird etwas größer.

Durch die erfindungsgemäße Ausbildung des Keilspannzeugs kann durch gleichzeitige Beaufschlagung der Ringräume, die zum Spannen und des Ringraums, der zum Entspannen vorgesehen ist, die Einspannkraft an der Probe herabgesetzt werden. Dies kann z. B. beim Einspannen weicher Proben von Vorteil sein.

Das erfindungsgemäße Keilspannzeug ist so ausgebildet, daß die Spannkeile nur in radialer Richtung bewegt werden, so daß beim Verspannen keine störenden Axialkräfte auf die Probe aufgebracht werden. Hierbei ist es aus konstruktiven Gründen zweckmäßig, wenn die Kolben-Zylindereinheiten aus Einzelelementen zusammengesetzt sind.

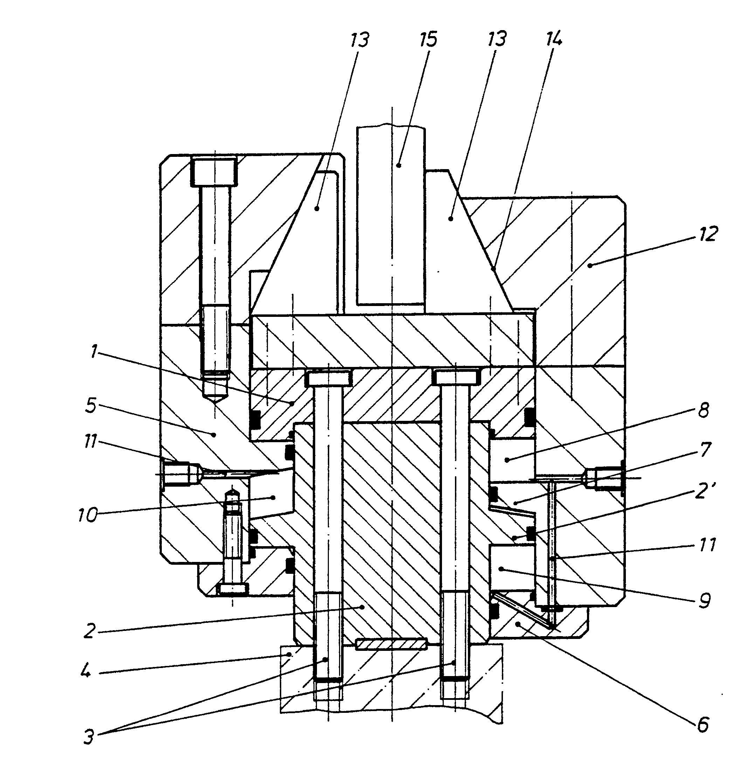

Die Erfindung wird an einem Ausführungsbeispiel in der Zeichnung dargestellt und in der Beschreibung näher erläutert.

Die Patentzeichnung zeigt ein hydraulisch betätigtes Keilspannzeug mit drei Ringräumen, wobei die linke Seite der Darstellung die Öffnungsstellung und die rechte Seite der Schließstellung (Klemmstellung) des Keilspannzeugs zeigt.

Der Kolben 1, 2 für die Betätigung der Spannkeile ist, wie dargestellt, zweiteilig ausgebildet und mit Schrauben 3 auf dem Betätigungskolben 4 der Prüfmaschine befestigt. Der Kolben weist ein Deckelteil 1 und ein Schaftteil 2 mit Ringflansch oder Ringkolben 2' auf. Der Kolben 1, 2 kann auch mit einem Querhaupt, einem Kraftaufnehmer oder anderen Kraftübertragungselementen der Prüfmaschine verbunden sein.

Das Zylindergehäuse 5 für den Kolben 1, 2 ist ebenfalls mehrteilig ausgebildet. Es weist einen Deckel 6 und einen inneren Ringflansch 7 auf. Die Ausbildung und die Abmessungen von Kolben und Zylindergehäuse sind aufeinander abgestimmt. Der Deckel 6 und der innere Ringflansch 7 bilden mit dem Deckelteil 1 des Kolbens und dem Ringkolben 2′ Ringräume 8, 9 und 10. Die Ringräume können über Druckmittelzuführungskanäle 11 mit Druckmittel beaufschlagt werden. Am Kolben und am Zylindergehäuse sind, wie in der Zeichnung schematisch angedeutet, geeignete Abdichtelemente angeordnet.

Am Zylindergehäuse 5 ist ein Keilgehäuse 12 für die Betätigung der Spannkeile 13 befestigt, z. B. wie dargestellt verschraubt. Die Spannkeile 13 sind auf dem Deckelteil 1 des Kolbens zum Einspannen einer Probe 15 in radialer Richtung beweglich geführt.

Zum Einspannen der Probe 15 werden die Ringräume 8 und 9 mit Druckmittel beaufschlagt, der Ringraum 10 bleibt drucklos. Dadurch bewegt sich das Zylindergehäuse 5 mit dem Keilgehäuse 12 im dargestellten Ausführungsbeispiel nach unten. Über die Keilflächen 14 am Keilgehäuse 12 werden die Spannkeile 13 in radialer Richtung nach innen und damit senkrecht zur Probe 15 verschoben und spannen die Probe fest.

Wird der Ringraum 10 gleichzeitig mit den Ringräumen 8 und 9 mit Druckmittel beaufschlagt, so kann die Einspannkraft an der Probe entsprechend dem Druck und/oder dem Flächenverhältnis in den Druckräumen 9 und 10 herabgesetzt werden. Dies kann z. B. beim Einspannen weicher Proben von Vorteil sein.

Zur Lösung der Verspannung werden die Ringräume 8 und 9 drucklos gemacht und der Ringraum 10 mit Druckmittel beaufschlagt. Dadurch bewegt sich das Zylindergehäuse 5 mit dem Keilgehäuse 12 in der Zeichnung nach oben. Die Spannkeile 13 bewegen sich in einem nicht dargestellten Führungssystem zwangsweise in radialer Richtung nach außen und geben die Probe 15 frei.

## Patentansprüche

1. Druckmittelbetriebenes Keilspannzeug für Werkstoffprüfeinrichtungen mit einem Zylindergehäuse (5-7), einem im Zylindergehäuse (5-7) angeordneten Kolben (1, 2, 2′) und Keilspannbacken (13), die vom Kolben (1, 2, 2′) beaufschlagt werden und die mit Gegenflächen am Keilspannzeug zur Einspannung einer Probe (15) oder eines Bauteils zusammenwirken, dadurch gekennzeichnet, daß Zylindergehäuse (5-7) und Kolben (1, 2, 2′) so ausgebildet sind, daß zur Einspannung der Probe (15) mindestens zwei hintereinander liegende Kolben-Zylinderanordnungen mit Ringräumen (8, 9) entstehen und daß zur Entspannung der Probe (15) mindestens eine Kolben-Zylinderanordnung mit Ringraum (10) entsteht, wobei die zwischen Zylindergehäuse (5-7) und Kolben (1, 2, 2′) vorhandenen Ringräume (8, 9, 10) jeweils durch eine am Kolben (1, 2, 2′) und eine am Zylindergehäuse (5-7) druckbeaufschlagbare Ringfläche gebildet werden und daß die Ringräume (8, 9, 10) getrennt mit Druckmittel beaufschlagbar sind.

2. Hydraulisches Keilspannzeug nach Anspruch 1, dadurch gekennzeichnet, daß die Keilspannbacken (13) am Kolben (1) in Einspannrichtung, d. h. radialer Richtung, beweglich angeordnet sind, wobei zur Einspannung und Entspannung der Probe (15) das Zylindergehäuse (5 - 7) in axialer Richtung bewegt wird.

3. Hydaulisches Keilspannzeug nach Anspruch 1 oder 2, dadurch gekennzeichnet, daß am Zylindergehäuse (5) ein Keilgehäuse (12) für die Betätigung der Keilspannbacken (13) angeordnet ist.

4. Hydraulisches Keilspannzeug nach Anspruch 1, dadurch gekennzeichnet, daß der Kolben (1, 2, 2′) mit einem Betätigungselement (4) der Werkstoffprüfeinrichtung verbunden ist.

5. Hydraulisches Keilspannzeug nach einem der vorhergehenden Ansprüche, dadurch gekennzeichnet, daß die Kolben-Zylindereinheiten (1/2, 5/6) aus Einzelelementen zusammengesetzt sind.

## Claims

1. A wedged clamping device which is operated by a pressure medium, for materials testing devices having a cylindrical casing (5-7), a piston (1,2,2′) arranged in the cylindrical casing and wedged clamping jaws (13) which are acted upon by the piston (1,2,2′) and which cooperate with counter surfaces on the wedged clamping device for gripping a test piece (15) or a component, **characterised in that** cylinder casing (5-7) and piston (1, 2,2′) are so formed that at least two piston cylinder arrangements lying one behind the other having annular spaces (8,9) are formed for gripping the test piece (15) and that at least one piston cylinder arrangement with an annular space (10) is formed for releasing the test piece (15), in which the annular chambers (8,9,10) between the cylindrical casing (5-7) and piston (1,2,2′) each are formed by annular surfaces which can be acted upon by pressure, one at the piston (1,2,2') and one at the cylindrical casing (5-7) and that the annular spaces (8, 9, 10) can be acted upon separately by pressure medium.

2. An hydraulic wedged clamping device according to claim 1, **characterised in that** the wedged clamping jaws (13) are arranged on the piston (1) so as to be movable in the gripping direction, i.e. radially, the cylindrical casing (5-7) being moved axially for gripping and releasing the test piece (15).

3. An hydraulic wedged clamping device according to claim 1 or 2, **characterised in that** a wedge casing (12) for actuating the wedged clamping jaws (13) is arranged on the cylindrical casing (5).

4. An hydraulic wedged clamping device according to claim 1, **characterised in that** the piston (1,2,2') is connected to an actuating element (4) of the materials testing device.

5. An hydraulic wedged clamping device according to any one of the preceding claims, **characterised in that** the piston cylinder units (1/2, 5/6) are made up of individual elements.

**Revendications**

1. Outil de serrage à coin actionné par un fluide sous pression, pour installation d'essai de matériaux, avec un boîtier cylindrique (5 à 7), un piston (1,2,2'), disposé dans le boîtier cylindrique (5 à 7) et des mâchoires de serrage à coin (13), sollicitées par le piston (1,2,2') et coopérant avec des contre-surfaces situées sur l'outil de serrage à coin, pour bloquer une éprouvette (15) ou une pièce de construction, caractérisé en ce que le boîtier cylindrique (5 à 7) et le piston 1,2,2') sont réalisés de telle façon que pour bloquer l'éprouvette (15), on crée au moins deux dispositifs à piston et cylindres placés l'un derrière l'autre, avec des espaces annulaires (8,9), et que, pour débloquer l'éprouvette (15), on crée au moins un dispositif à piston et cylindre, avec espace annulaire (10), les espaces annulaires (8,9,10) existant entre le boîtier cylindrique (5 à 7) et le piston (1,2,2') étant chacun formé par une surface annulaire pouvant être sollicitée à la pression, sur le piston (1,2,2') et une surface annulaire pouvant être sollicitée à la pression, sur le boîtier cylindrique (5 à 7), et que les espaces annulaires (8,9,10) peuvent être sollicités séparément par le fluide sous pression.

2. Outil de serrage hydraulique selon la revendication 1, caractérisé en ce que les mâchoires de serrage à coin (13) sont disposées mobiles sur le piston, dans le sens de serrage, c'est-à-dire en direction axiale, le boîtier cylindrique (5 à 7) étant déplacé en direction axiale pour assurer le blocage et le déblocage de l'éprouvette (15).

3. Outil de serrage hydraulique selon la revendication 1 ou 2, caractérisé en ce qu'un boîtier à coin (12) est disposé sur le boîtier cylindrique (5), pour assurer l'actionnement des mâchoires de serrage à coin (13).

4. Outil de serrage hydraulique selon la revendication 1, caractérisé en ce que le piston (1,2,2') est relié à un élément d'actionnement (4) du dispositif d'essai de matériaux.

5. Outil de serrage hydraulique selon l'une des revendications précédentes, caractérisé en ce que les ensembles à piston et cylindre (1/2, 5/6) sont composés d'éléments individuels.